# DEMANDE DE BREVET EUROPEEN

(11) **EP 2 400 753 A1**
(43) Date de publication de la demande: **28.12.2011**
(21) Numéro de dépôt: 11171619.7
(22) Date de dépôt: 28.06.2011
(51) Int. Cl.: H04N 7/173

(54) **Obtention d'informations complémentaires associées à un contenu diffusé**

(30) Priorité: 28.06.2010 FR 1055152
(71) Demandeur: France Telecom, 75015 Paris (FR)
(72) Inventeur: Bouguet, Arnaud, 22300 LANNION (FR); Denjean, Marc, 75020 PARIS (FR); Poivre, Sébastien, 22300 LANNION (FR); Bolio, Tania, 35000 RENNES (FR)

(57) **Abrégé**

L'invention se rapporte à un procédé de réception d'informations complémentaires associées à un contenu multimédia diffusé pendant un intervalle de temps prédéterminé sur un canal de transmission sur un écran déporté (ECR). Selon l'invention, le procédé de réception est adapté à transmettre une requête contenant un identifiant du canal, à recevoir des informations extraites d'au moins un ensemble d'informations complémentaires sélectionné parmi une pluralité d'ensembles d'informations complémentaires en fonction dudit identifiant de canal et à afficher sur un écran local (E), pendant au moins une partie de l'intervalle de temps prédéterminé, au moins une information desdites informations extraites.

L'invention se rapporte également à un procédé de transmission d'informations complémentaires associées à un contenu multimédia.

L'invention se rapporte à un dispositif de réception (M) et à un serveur (S) mettant en oeuvre les procédés de réception et de transmission respectivement.

## Description

L'invention se situe dans le domaine des télécommunications et plus particulièrement dans le domaine de la diffusion de programmes audiovisuels.

De façon connue, des programmes audiovisuels sont diffusés sur des dispositifs de diffusion, appelés classiquement téléviseurs, dans des foyers équipés, par exemple et de façon non limitative, d'une "Set-Top Box" raccordée à un réseau de diffusion de programmes audiovisuels, par exemple et de façon non limitative un réseau haut débit de type ADSL (pour "Asymmetric Digital Subscriber Line" en anglais ou "liaison numérique à débit asymétrique sur ligne d'abonné " en français), ou un réseau câblé numérique, ou encore un réseau hertzien, par exemple TNT (pour "Télévision Numérique Terrestre").

De façon générale, une "Set-top Box" est un terminal numérique permettant d'accéder à un service "multiplay" (multiservices) et/ou d'effectuer un décodage de flux multimédia et/ou audiovisuels.

Un téléspectateur regardant un programme audiovisuel sur une télévision peut souhaiter obtenir des informations complémentaires en lien avec le programme regardé. Ces informations complémentaires sont, par exemple, le nom de l'actrice principale du film en cours de diffusion ou le titre d'un autre film dans lequel cette actrice joue. Ces informations complémentaires peuvent être obtenues de façon connue en utilisant le réseau Internet, au moyen d'un terminal équipé d'un module de navigation. Pour des raisons de concentration de l'utilisateur notamment, la recherche de ces informations pendant la diffusion du film n'est pas aisée.

Par ailleurs, l'entité émettrice du programme peut souhaiter diffuser des informations complémentaires au cours de la diffusion de l'émission. Par exemple lorsqu'un événement intervient pendant la diffusion d'une émission, par exemple un numéro de téléphone à contacter pour obtenir des détails sur un produit présenté dans une publicité, l'information peut être insérée dans le flux vidéo et affichée sous forme de bandeau sur l'écran de la télévision. Ce bandeau peut être gênant pour les téléspectateurs car il masque une partie de l'image du programme.

Il existe donc un besoin pour un téléspectateur d'obtenir des informations complémentaires en lien avec un programme audiovisuel diffusé sans perturber ni le visionnage ni la diffusion d'une émission en cours.

L'invention vient améliorer la situation.

A cet effet, elle propose un procédé de réception d'informations complémentaires associées à un contenu multimédia diffusé pendant un intervalle de temps prédéterminé via un canal de transmission et affiché sur un écran déporté, conforme à la revendication 1.

Le procédé de réception comprend notamment les étapes suivantes :
- obtention d'un identifiant dudit canal;
- transmission d'une requête contenant l'identifiant obtenu;
- réception d'informations extraites d'au moins un ensemble d'informations complémentaires sélectionné parmi une pluralité d'ensembles d'informations complémentaires en fonction dudit identifiant de canal;
- affichage, sur un écran local, pendant au moins une partie de l'intervalle de temps prédéterminé, d'au moins une information des dites informations extraites.

Les informations complémentaires associées à un contenu multimédia tel que par exemple une émission télévisée, sont reçues sous la forme de contenus complémentaires et sont diffusées en temps réel, pendant la diffusion du contenu multimédia. L'utilisateur a ainsi accès simultanément à un flux multimédia comprenant un contenu multimédia diffusé sur un premier terminal, par exemple un téléviseur, et à un flux complémentaire comprenant un ou plusieurs contenus complémentaires transmis et affichés sur un deuxième terminal, par exemple un téléphone mobile. Le flux complémentaire est séparé du flux multimédia. Ainsi, la diffusion du flux multimédia n'est pas perturbée.

La réception d'informations complémentaires associées pendant la diffusion d'un flux multimédia permet à un utilisateur d'obtenir des informations pertinentes pour lui sans nécessiter une navigation complexe.

Selon un mode de réalisation particulier du procédé de réception, les étapes de réception et d'affichage sont réitérées en fonction d'un avancement du contenu multimédia diffusé.

La réception des informations complémentaires au fur et à mesure de l'avancement de la diffusion d'un contenu telle qu'une émission de télévision, permet d'utiliser une mémoire de petite taille dans le deuxième terminal. Le stockage d'un nombre restreint d'ensembles d'informations complémentaires permet une sélection rapide des informations à afficher.

Selon un mode de réalisation particulier du procédé de réception, ledit au moins un ensemble d'informations complémentaires est sélectionné en outre en fonction d'un identifiant dudit contenu diffusé.

Ce mode de réalisation permet une adaptation facile aux changements d'horaire dans la diffusion des contenus et l'utilisation de plusieurs ensembles d'informations complémentaires pour plusieurs diffusions d'un même contenu.

Selon un mode de réalisation particulier du procédé de réception, ledit au moins un ensemble d'informations complémentaires est sélectionné en outre en fonction d'un instant donné dans l'intervalle de temps prédéterminé.

Ce mode de réalisation utilisé seul ou en combinaison avec le mode de réalisation précédent permet l'affichage d'une information complémentaire en lien avec un contenu diffusé sur le premier terminal, au cours de la diffusion. Le début et la durée de l'affichage sont par exemple liés à un évènement intervenant dans le contenu, par exemple un moment clé d'un film comme le dénouement ou l'intervention d'un acteur particulier.

Selon un mode de réalisation particulier du procédé de réception, la requête comprend en outre des paramètres utilisateur et ledit au moins un ensemble d'informations complémentaires et/ou les informations extraites d'un ensemble d'informations complémentaires sont sélectionnés en outre en fonction desdits paramètres.

Les paramètres utilisateur permettent par exemple d'adapter les informations complémentaires au terminal de l'utilisateur ou à des critères de préférence. Par exemple, un paramètre utilisateur est un type de terminal et le format d'affichage d'une image contenue dans les informations complémentaires est adapté au type de terminal.

Selon un mode de réalisation particulier du procédé de réception, les informations extraites reçues sont extraites de plusieurs ensembles d'informations complémentaires, les informations extraites d'un ensemble comprennent au moins un identifiant de contenu et, lors de l'étape d'affichage, les informations sont affichées en fonction d'un identifiant de contenu sélectionné parmi les identifiants reçus en fonction d'un planning de diffusion.

Dans ce mode de réalisation, les informations complémentaires sont reçues avant leur affichage et sélectionnées au moment de l'affichage. Ce mode de réalisation permet une meilleure synchronisation avec le contenu diffusé dans le cas où le volume d'informations complémentaires à transmettre est important.

Selon un mode de réalisation particulier du procédé de réception, ledit au moins un ensemble d'informations complémentaires contient une information temporelle, et l'affichage est effectué en fonction de ladite information temporelle.

Ce mode de réalisation utilisé seul ou en combinaison avec les modes de réalisation précédents permet l'affichage d'une information complémentaire à un instant prédéterminé dans le contenu. L'instant prédéterminé est par exemple lié à un évènement intervenant dans le contenu, par exemple un moment clé d'un film comme le dénouement ou l'intervention d'un acteur particulier.

Selon un mode de réalisation particulier, le procédé de réception comporte en outre une étape de transmission d'une requête complémentaire contenant un deuxième identifiant de canal et au moins une étape de réception d'au moins un ensemble d'informations complémentaires sélectionné parmi une pluralité d'ensembles d'informations complémentaires en fonction dudit deuxième identifiant de canal.

Ainsi, un utilisateur regardant une émission diffusée sur un canal de transmission, peut obtenir une information complémentaire liée à une émission diffusée sur un autre canal de transmission.

Selon un mode de réalisation particulier, le contenu diffusé est affiché sur l'écran d'un premier dispositif d'un réseau privé et l'identifiant de canal est obtenu en réponse à une requête d'identifiant de canal émise par un deuxième dispositif dudit réseau privé.

La détection automatique de l'identifiant de canal permet d'obtenir des informations complémentaires au programme regardé sans nécessiter de manipulation de la part de l'utilisateur.

L'invention se rapporte également à un dispositif de réception d'informations complémentaires associées à un contenu multimédia diffusé pendant un intervalle de temps prédéterminé via un canal de transmission et affiché sur un écran déporté, conforme à la revendication 12.

Le dispositif de réception comporte notamment :
- des moyens d'obtention d'un identifiant dudit canal;
- des moyens de transmission d'une requête contenant l'identifiant obtenu;
- des moyens de réception d'informations extraites d'au moins un ensemble d'informations complémentaires sélectionné parmi une pluralité d'ensembles d'informations complémentaires en fonction dudit identifiant de canal;
- des moyens d'affichage, sur un écran local, pendant au moins une partie de l'intervalle de temps prédéterminé, d'au moins une information des dites informations extraites.

Selon un mode de réalisation particulier, les moyens d'obtention comprennent des moyens de communication avec un réseau privé

Ceci permet d'obtenir un identifiant du canal de transmission sans intervention de l'utilisateur sur le deuxième terminal. Ceci permet également d'obtenir un nouvel identifiant de canal lors d'un changement de canal.

L'invention se rapporte également à un procédé de transmission d'informations complémentaires associées à un contenu multimédia diffusé pendant un intervalle de temps prédéterminé via un canal de transmission et affiché sur un écran déporté, conforme à la revendication 13.

Le procédé de transmission comprend notamment :
- une étape préalable d'enregistrement d'une pluralité d'ensembles d'informations complémentaires en association avec une information temporelle et avec un identifiant de canal;
- une étape de réception d'une requête contenant un identifiant de canal;
- une étape de sélection parmi une pluralité d'ensembles d'informations complémentaires d'au moins un ensemble d'informations complémentaires en fonction dudit identifiant de canal;
- une étape de transmission d'informations extraites dudit au moins un ensemble d'informations complémentaires sélectionné.

L'invention concerne également un serveur conforme à la revendication 14.

Le serveur comprend notamment :
- des moyens d'enregistrement d'une pluralité d'ensembles d'informations complémentaires en association avec une information temporelle et avec un identifiant de canal;
- des moyens de réception d'une requête contenant un identifiant de canal;
- des moyens de sélection parmi la pluralité d'ensembles d'informations complémentaires d'au moins un ensemble d'informations complémentaires en fonction dudit identifiant de canal;
- des moyens de transmission d'informations extraites dudit au moins un ensemble d'informations complémentaires sélectionné.

L'invention se rapporte encore à un produit programme d'ordinateur comprenant des instructions pour mettre en oeuvre les étapes d'un procédé de réception tel que décrit dans la présente demande, lorsqu'il est chargé et exécuté par un processeur.

L'invention se rapporte enfin à un produit programme d'ordinateur comprenant des instructions pour mettre en oeuvre les étapes d'un procédé de transmission tel que décrit dans la présente demande, lorsqu'il est chargé et exécuté par un processeur.

D'autres particularités et avantages de la présente invention apparaitront dans la description suivante de modes de réalisation donnés à titre d'exemples non limitatifs, en référence aux dessins annexés, dans lesquels :
- la figure 1 est un schéma général illustrant un système dans lequel l'invention est mise en oeuvre selon un premier mode de réalisation,
- la figure 2 est un organigramme présentant les différentes étapes du procédé de l'invention, selon un premier mode de réalisation,
- la figure 3 est un organigramme présentant les différentes étapes du procédé de l'invention, selon un deuxième mode de réalisation,
- la figure 4 est un schéma illustrant un exemple d'ensembles d'informations complémentaires,
- la figure 5 est un schéma illustrant un exemple de planning.

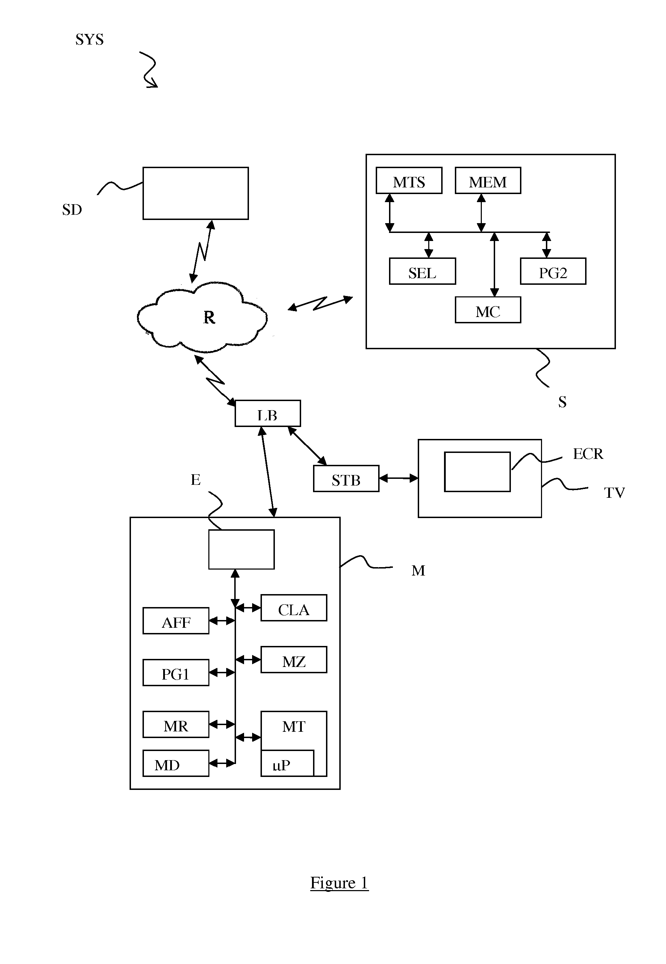

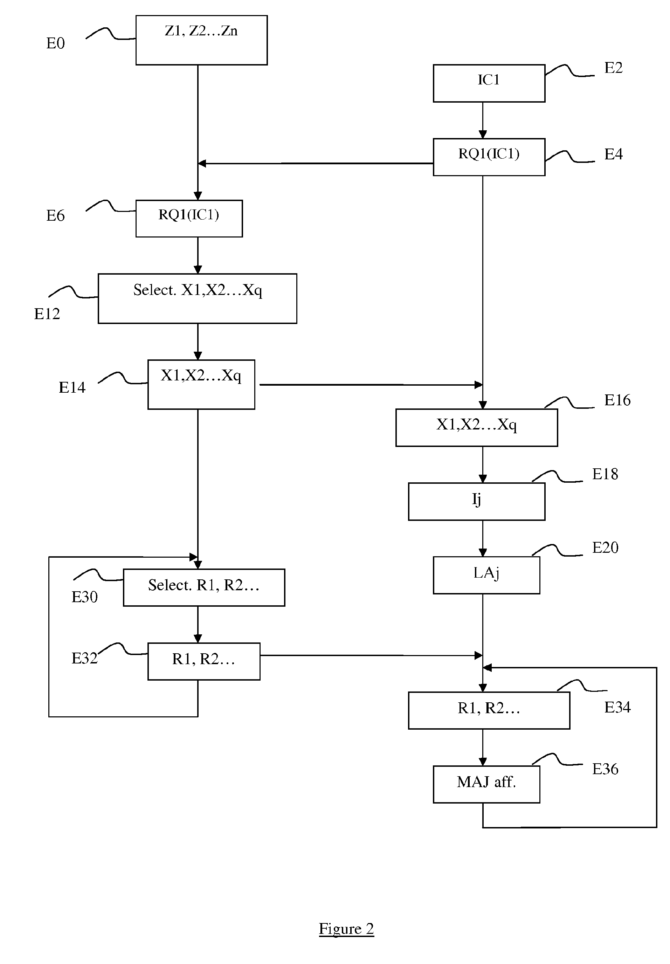

Un mode de réalisation particulier d'un procédé de réception, respectivement d'un procédé de transmission, d'informations complémentaires associées à un contenu multimédia diffusé pendant un intervalle de temps prédéterminé via un canal de transmission et affiché sur un écran déporté va maintenant être décrit en référence aux figures 1 et 2.

En référence à la **figure 1**, un système **SYS** comprend un premier dispositif de réception TV d'un réseau privé, par exemple un réseau domestique. Le premier dispositif TV est apte à recevoir via par exemple une passerelle domestique LB, par exemple une LiveBOX (marque déposée), et un adaptateur STB, par exemple un adaptateur de type Set Top Box, un flux multimédia diffusé par un serveur de diffusion SD au travers d'un réseau de communication R. Le flux multimédia est ici constitué de plusieurs contenus successifs.

Le premier dispositif TV est également apte à afficher en temps réel sur son écran ECR, le flux multimédia reçu. L'écran ECR représente ici un écran déporté par rapport au dispositif M décrit ultérieurement.

A titre d'alternative, le flux multimédia est transmis directement au premier dispositif TV via un réseau hertzien.

Le système SYS comprend également un deuxième dispositif M.

Dans le mode de réalisation décrit ici, le deuxième dispositif M est un terminal mobile.

A titre d'alternative, le deuxième dispositif est un terminal de type PDA ou encore un ordinateur de type PC.

Le terminal M comporte une unité de traitement MT munie d'un microprocesseur, reliée à une mémoire MZ. La mémoire MZ est par exemple une mémoire temporaire de type RAM.

L'unité de traitement MT est pilotée par un programme informatique PG1. Le programme informatique PG1 comporte des instructions de programme adaptées à mettre en oeuvre notamment un procédé de réception d'informations complémentaires selon un mode de réalisation de l'invention décrit ultérieurement en référence à la figure 2.

Le terminal M comporte également un clavier CLA, un écran de visualisation E, dit écran local et un module d'affichage AFF pour l'affichage sur l'écran de visualisation E.

Il comporte également un module de communication MR avec le réseau de communication R.

Dans le mode de réalisation décrit, le module de communication MR est apte à communiquer avec le réseau R via le réseau domestique, c'est-à-dire à travers la passerelle domestique LB en mode sans fil, par exemple de type Wifi, la passerelle domestique LB étant apte à dialoguer avec un serveur distant via le réseau R.

A titre d'alternative, le module de communication MR est apte à communiquer avec un serveur distant via un réseau de type GSM ou un réseau mobile de type 3G.

Le terminal M comporte également un module MD de dialogue avec l'adaptateur STB via une liaison sans fil et le réseau domestique.

A titre d'alternative, le terminal M ne comporte pas de module d'accès au réseau domestique. Le système SYS comporte également un serveur S.

Le serveur S comporte une unité de traitement MTS munie d'un microprocesseur, reliée à une mémoire MEM. L'unité de traitement MTS est pilotée par un programme informatique PG2. Le programme informatique PG2 comporte des instructions de programme adaptées à mettre en oeuvre notamment un procédé de transmission d'informations complémentaires selon un mode de réalisation de l'invention décrit ultérieurement en référence à la figure 2.

Le serveur S comporte également un module de construction MC et un module de sélection SEL.

En référence à la **figure 2**, les étapes du procédé de réception et de transmission d'informations complémentaires sont illustrées.

Les étapes E0, E6, E12, E14, E30 et E32 représentent les étapes du procédé de transmission mises en oeuvre par exemple par le serveur S.

Les étapes E2, E4, E16, E18, E20, E34 et E36 représentent les étapes du procédé de réception mises en oeuvre par exemple par le dispositif M de type téléphone mobile.

Lors d'une étape préalable E0, le module de construction MC construit N ensembles Z1, Z2 ...Zn d'informations complémentaires et les enregistre dans la mémoire MEM du serveur S.

Un ensemble d'informations complémentaires est par exemple un ensemble de données permettant d'obtenir des informations sur des acteurs d'un film ou pour obtenir un résumé d'un épisode d'une série télévisée ou encore un message pour informer l'utilisateur d'un moment crucial d'un film, par exemple le dénouement.

Un ensemble d'informations est par exemple saisi par un utilisateur au moyen d'une interface graphique.

A titre d'alternative, les ensembles Z1, Z2...Zn d'informations complémentaires sont enregistrés dans une base de données (non représentée) accessible par le serveur S.

Encore, à titre d'alternative, le serveur S ne comporte pas de module de construction MC, l'étape E0 est réalisée par un dispositif de construction (non représenté) et les ensembles Z1, Z2 ...Zn d'informations complémentaires sont enregistrés par le dispositif de construction dans une mémoire accessible par le serveur S.

Dans le mode de réalisation décrit ici, un ensemble Zi d'informations complémentaires comprend une image Ii, un lien d'accès LAi, un identifiant de canal ICi, une heure de diffusion Hi et une durée d'affichage DAi.

A titre d'alternative, l'ensemble Zi d'informations complémentaires comprend un contenu CTi, un lien d'accès LAi, un identifiant de canal ICi, une heure de diffusion Hi et une durée d'affichage DAi. Le contenu CTi est par exemple un contenu vidéo ou un message texte.

Le serveur de diffusion SD transmet un contenu multimédia C1, par exemple une série télévisée, sur un canal de transmission et le contenu C1 est affiché sur l'écran ECR du premier dispositif TV.

Lors d'une étape E2, le terminal M obtient un identifiant IC1 du canal de transmission.

Dans le mode de réalisation décrit, l'identifiant de canal ICI est obtenu en réponse à une requête générée et transmise par le terminal M à l'adaptateur STB à travers le réseau domestique. La requête est par exemple transmise lors d'une étape de démarrage.

Dans le mode de réalisation décrit, la requête est ensuite transmise périodiquement pour détecter un éventuel changement de canal de transmission.

A titre d'alternative, l'identifiant de canal ICI est saisi par l'utilisateur, par exemple au moyen d'une interface graphique affichée sur l'écran E du terminal M et du clavier CLA ou d'une interface tactile dans le cas où l'écran du terminal M est un écran tactile.

Lors d'une étape E4, le terminal M transmet au serveur S, via le réseau domestique, la passerelle domestique LB et le réseau R, une requête RQ1 contenant l'identifiant de canal ICI.

La requête RQ1 est par exemple une requête HTTP (pour "HyperText Transfer Protocol" en anglais).

A titre d'alternative, la requête RQ1 est transmise au serveur S via le réseau GSM et le réseau de communication R.

La requête RQ1 est reçue par le serveur S lors d'une étape E6.

Puis, lors d'une étape E12, le serveur S sélectionne parmi les N ensembles d'informations complémentaires Z1, Z2 ...Zn enregistrés dans la mémoire MEM, un ou plusieurs ensembles d'informations complémentaires. Par exemple, Q ensembles Zi sont sélectionnés : X1, X2, Xq.

Dans le mode de réalisation décrit, les ensembles d'informations complémentaires sont sélectionnés en fonction de l'identifiant de canal reçu IC1 et d'une heure de diffusion prédéterminée H. Par exemple, l'heure de diffusion prédéterminée H est l'heure courante et les ensembles d'informations complémentaires Zi_pour lesquels l'heure de diffusion Hi est comprise entre l'heure courante H et une heure de diffusion Hf = H+1 minute sont sélectionnés. L'utilisation de l'heure courante H permet ici de sélectionner des ensembles d'informations complémentaires synchronisés avec le contenu diffusé sur l'écran déporté.

Les Q ensembles sélectionnés X1, X2...Xq sont ensuite transmis au terminal mobile M lors d'une étape E14 et reçus par le terminal mobile M lors d'une étape E16.

A titre d'alternative, seule une partie des informations contenues dans chacun des Q ensembles sélectionnés est transmise lors de l'étape E14. Par exemple, l'image Ij, le lien d'accès LAj et la durée d'affichage DAj sont transmis pour chaque ensemble Xj sélectionné.

Encore à titre d'alternative, les ensembles d'informations complémentaires comprennent des éléments, par exemple une image, sous différents formats d'affichage et la requête principale RQ1 contient un ou plusieurs attributs. Par exemple, la requête RQ1 contient un format d'affichage. Un format d'affichage est un exemple de paramètre utilisateur. Lors de l'étape E14 de sélection, l'image correspondant au format d'affichage contenu dans la requête RQ1 est sélectionnée. La transmission d'un format d'affichage permet de recevoir des contenus compatibles avec un format d'affichage du terminal M.

Lors d'une étape E18, le terminal mobile M affiche sur l'écran E une ou plusieurs informations relatives à chacun des Q ensembles X1, X2...Xq reçus.

Par exemple, lors de l'étape E18, une image Ij est affichée pour chaque ensemble Xj reçu.

Lors d'une étape E20, l'utilisateur peut accéder à un ou plusieurs contenus associés au lien LAj contenu dans l'ensemble Xj. L'accès est par exemple effectué à l'aide de fonctions, par exemple "voir" ou " enregistrer" sélectionnables à l'aide d'une interface graphique affichée sur l'écran E du terminal M. La fonction "voir" permet par exemple d'accéder à un site Web au moyen du lien d'accès LAj. La fonction "enregistrer" permet par exemple d'enregistrer le lien d'accès LAj pour un accès ultérieur.

Lors d'une étape E30, le serveur S sélectionne de nouveaux ensembles d'informations complémentaires R1, R2...en fonction d'une heure de diffusion mise à jour, par exemple l'heure courante. Les ensembles sont ainsi sélectionnés en fonction d'un avancement dans le contenu diffusé sur l'écran ECR du premier dispositif TV.

Puis lors d'une étape E32, les ensembles sélectionnés R1, R2...sont transmis au terminal M. Les ensembles sélectionnés R1, R2...sont reçus par le terminal M lors d'une étape E34.

Dans le mode de réalisation décrit, les étapes E30 et E32 sont réitérées tant que le serveur n'a pas reçu une requête de fin transmise par le terminal M.

A titre d'alternative, les ensembles sélectionnés sont transmis en réponse à une requête transmise périodiquement par le terminal M. La période de transmission est par exemple de l'ordre de la minute pour permettre un affichage temps réel des informations complémentaires.

Lors d'une étape E36 consécutive à l'étape E34, le terminal M met à jour l'affichage des ensembles d'informations complémentaires. Plus précisément, une information relative à chaque ensemble reçu Rk pour lequel la durée d'affichage DAk n'a pas expiré est affichée.

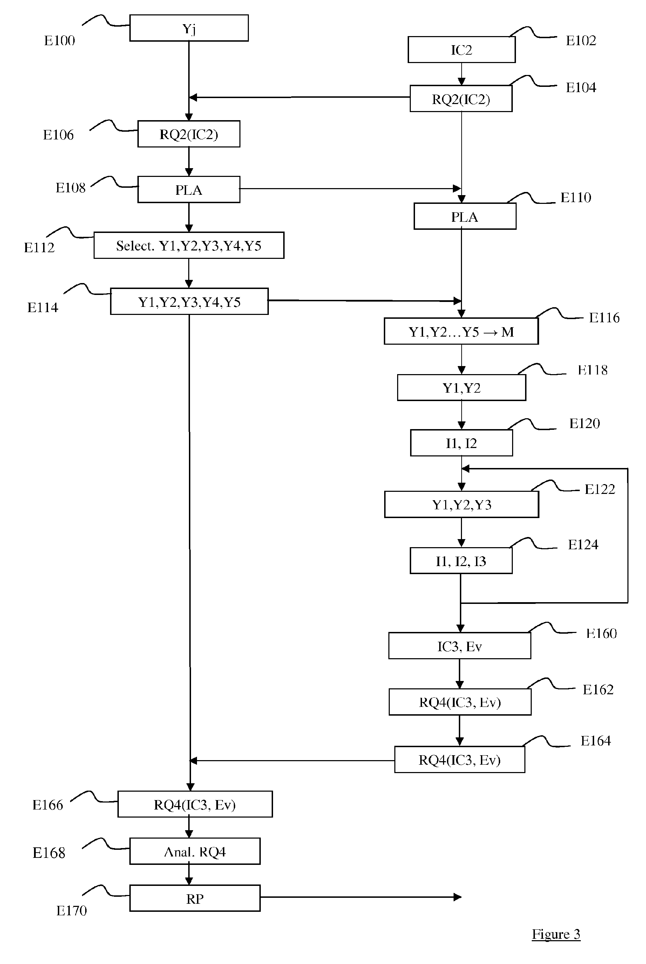

Un deuxième mode de réalisation particulier d'un procédé de réception, respectivement d'un procédé de transmission selon l'invention va maintenant être décrit en référence aux figures 3 à 5.

Dans ce mode de réalisation, un ensemble Yj d'informations complémentaires associé à un programme Pr comprend des données d'accès Dj, un délai d'affichage HAj et une durée d'affichage DAj. Le délai d'affichage HAj est ici un délai d'attente à partir du début de la diffusion du contenu sur l'écran ECR du premier dispositif TV.

Les données d'accès Dj sont par exemple une image Ij et un lien d'accès LAj, un contenu Cj ou encore un message texte Tj.

A titre d'alternative, les données d'accès contiennent également des paramètres tels qu'une catégorie, par exemple "sport" ou "journal", un titre ou un numéro d'épisode

En référence à la **figure 3**, lors d'une étape préalable E100, le module de construction MC construit des ensembles d'informations complémentaires Yj et les enregistre en association avec un identifiant de canal ICj et un identifiant de programme IPj dans la mémoire MEM du serveur S.

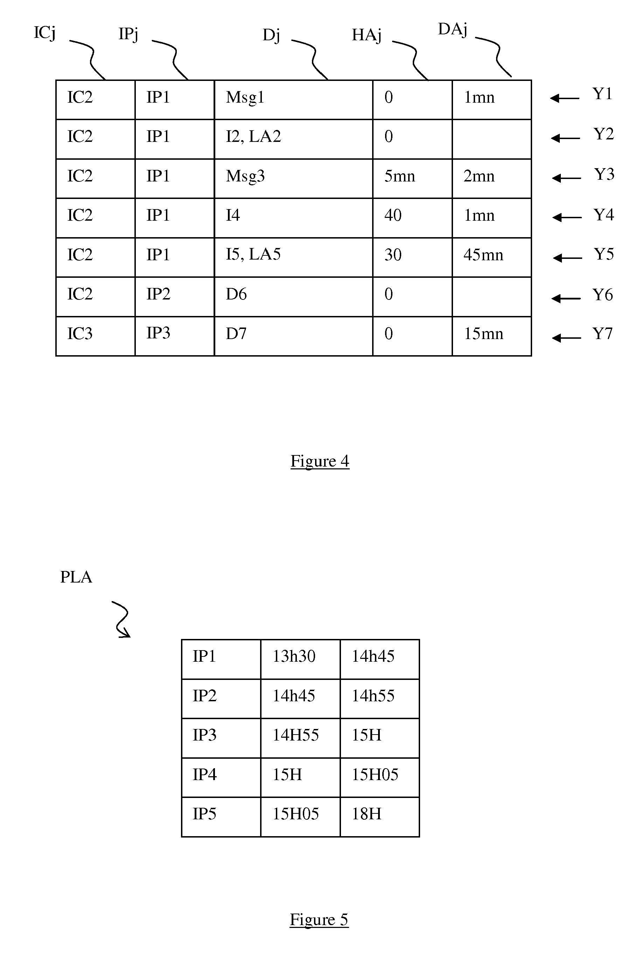

La **figure 4** présente un exemple d'informations complémentaires Yj enregistrées en association avec un identifiant de canal ICj et un identifiant de programme IPj.

Dans cet exemple, 7 ensembles Y1 à Y5 sont enregistrés.

Les ensembles Y1 à Y5 sont enregistrés en association avec un identifiant de programme IP1 et un identifiant de canal IC2. L'ensemble Y1 contient un message Msg1 relatif au début du programme et doit être affiché pendant 1mn dès le début du programme. L'ensemble Y2 permet d'obtenir des informations relatives à l'acteur principal. Il contient une image I2 et un lien d'accès LA2 et doit être affiché pendant toute la durée de diffusion du programme. L'ensemble Y3 est un message Msg3 permettant d'attirer l'attention de l'utilisateur à un moment crucial du programme, par exemple le moment du crime et doit être affiché 5 mn après le début de la diffusion pendant 2 minutes. L'ensemble Y4 contient une image I4 annonçant la fin d'une publicité et doit être affiché 40 minutes après le début du programme pendant 1 minute. L'ensemble Y5 contient une image I5 et un lien LA5 permettant d'accéder à un site de jeu en ligne en lien avec le programme diffusé. Il est affiché 30 minutes après le début de la diffusion pour une durée de 45 minutes.

L'ensemble Y6 est enregistré en association avec un identifiant de programme IP2 et un identifiant de canal IC2. L'ensemble Y7 est enregistré en association avec un identifiant de programme IP3 et un identifiant de canal IC3.

Le serveur de diffusion SD transmet successivement des contenus multimédia sur un canal de transmission prédéterminé et les contenus sont affichés en temps réel sur l'écran ECR du premier dispositif TV. Un contenu multimédia C2 est par exemple un programme de télévision diffusé pendant un intervalle de temps prédéterminé compris entre une heure de début de diffusion et une heure de fin de diffusion. Le contenu C2 est par exemple une série policière intitulée "les experts", diffusée sur le canal de transmission TF1. L'identifiant du canal TF1 est ici IP1 et l'identifiant du contenu C2 est IC2

Lors d'une étape E102, le terminal M obtient l'identifiant du canal de transmission IC2.

Lors d'une étape E104, le terminal M transmet au serveur S une première requête principale RQ2 contenant l'identifiant de canal IC2.

La requête RQ2 est reçue par le serveur S lors d'une étape E106.

Puis, lors d'une étape E108, le serveur S transmet au terminal M un planning prévisionnel PLA de diffusion de programmes sur le canal de transmission d'identifiant IC2.

La figure 5 illustre un exemple de planning PLA contenant pour le canal associé à l'identifiant de canal IC2, des identifiants de programme IP1, IP2... en association avec une heure de début de diffusion et une heure de fin de diffusion.

Par exemple, le planning PLA contient tous les programmes du jour non encore diffusés.

Le planning PLA est, par exemple, extrait d'un guide de programmes contenant les programmes et les horaires associés pour plusieurs canaux de transmission, par exemple des chaines de télévision.

Le planning PLA est reçu par le terminal M lors d'une étape E110.

Puis lors d'une étape E112, le serveur S sélectionne parmi les ensembles d'informations complémentaires enregistrés dans la mémoire MEM, un ou plusieurs ensembles d'informations complémentaires.

Dans le mode de réalisation décrit, un identifiant de programme IPi est déterminé par le serveur S par lecture du planning PLA en fonction de l'identifiant de canal IC2 et de l'heure courante H. L'identifiant de programme déterminé correspond ici au programme ou contenu en cours de diffusion sur le premier dispositif TV. Les ensembles d'informations complémentaires sont sélectionnés en fonction de l'identifiant de canal IC2 reçu et de l'identifiant de programme IPi déterminé.

Par exemple, si la requête RQ2 est reçue à 13h30, l'identifiant de programme sélectionné est IP1 et les ensembles sélectionnés sont Y1, Y2, Y3, Y4 et Y5.

Dans le mode de réalisation décrit ici, un seul identifiant de programme est déterminé.

A titre d'alternative, plusieurs identifiants de programme sont déterminés et les ensembles d'informations complémentaires sont sélectionnés en fonction de l'identifiant de canal IC2 reçu et des identifiants de programme IPi déterminés.

Par exemple, le nombre d'identifiants de programme déterminés dépend du nombre de programmes diffusés sur un intervalle de temps choisi, par exemple une demi-heure.

Encore à titre d'alternative, les ensembles d'informations complémentaires sont sélectionnés en fonction d'un titre et/ou de mots clés associés insérés d'un part dans le planning en association avec les identifiants de programme et d'autre part enregistrés en tant que mot clés dans les ensembles d'informations complémentaires.

Les ensembles sélectionnés Y1 à Y5 sont ensuite transmis au terminal M lors d'une étape E114. Lors d'une étape E116, ils sont reçus par le terminal M et enregistrés dans la mémoire MZ du terminal M.

Lors d'une étape E118, le terminal M sélectionne parmi les ensembles enregistrés dans la mémoire MZ, un ou plusieurs ensembles.

Dans le mode de réalisation décrit ici, le terminal M sélectionne les ensembles en fonction du programme en cours de diffusion et du délai d'affichage HAi. Le délai d'affichage est ici un délai d'attente à partir de l'heure de début de diffusion du programme en cours.

Par exemple, à 13h30, les ensembles Y1 et Y2 sont sélectionnés.

L'étape E118 est suivie d'une étape E120 lors de laquelle le terminal M affiche sur l'écran E le message msg1 associé à l'ensemble Y1 et l'image I2 contenue dans l'ensemble Y2.

L'utilisateur peut ensuite accéder à des contenus au moyen du lien d'accès LA2 de l'ensemble Y2.

Lors d'une étape E122, le terminal M réitère l'étape E118 de sélection des informations complémentaires à afficher.

Si les informations sélectionnées lors de l'étape E122 sont différentes des informations sélectionnées lors de l'étape E118, le terminal M affiche, lors d'une étape E124, les informations sélectionnées lors de l'étape E122.

En cas de nouvelles informations à afficher, un message est affiché sur l'écran E du terminal M, sous la forme d'un message "POP-UP", pour avertir l'utilisateur en temps réel de l'arrivée de nouvelles informations.

Les étapes E122 et E124 sont ensuite réitérées périodiquement.

Ainsi, à 13h32, seules des informations relatives à l'ensemble Y2 sont affichées. A 13h35, l'image I3 est affichée en plus de l'image I2.

Ultérieurement, l'utilisateur change le canal de diffusion du premier dispositif TV.

Les étapes E102 à E124 sont alors réitérées

Ainsi, lors de l'étape E102, le terminal M obtient un deuxième identifiant de canal IC3. Par exemple, le terminal M envoie périodiquement une requête à l'adaptateur STB et détecte ainsi en temps réel le changement de canal.

Lors de l'étape E104, le terminal M envoie une deuxième requête principale RQ3 contenant le deuxième identifiant de canal IC3.

Puis, lors de l'étape E106, le serveur S transmet au terminal M un deuxième planning PLA2. Le deuxième planning PLA2 est relatif aux programmes diffusés sur le canal de transmission ayant pour identifiant IC3.

Lors de l'étape E112, le serveur S sélectionne l'ensemble d'informations complémentaires Y5.

Lors d'une étape E160, l'utilisateur saisit manuellement au moyen d'une interface graphique et du clavier, un identifiant de canal IC3 et un évènement déterminé Ev. L'évènement déterminé est par exemple le début d'une émission déterminée.

A titre d'alternative, l'événement déterminé est le moment d'un vote dans un programme.

L'étape E160 est suivie d'une étape E162 lors de laquelle le terminal M construit une requête complémentaire RQ4 contenant l'identifiant de canal saisi et l'événement Ev déterminé.

La requête complémentaire RQ4 est transmise par le terminal M lors d'une étape E164 et reçue par le serveur S lors d'une étape E166. Lors d'une étape E168, la requête complémentaire RQ4 est analysée par le serveur S et le serveur S sélectionne un ensemble d'informations complémentaires en fonction de la requête complémentaire RQ4.

A titre d'alternative, le serveur S construit une réponse, par exemple par lecture du planning.

L'étape E168 est suivie d'une étape E170 lors de laquelle le serveur S envoie une réponse RP contenant les éléments demandés. La réponse RP est transmise par exemple, entre deux envois d'ensembles d'informations complémentaires.

A titre d'alternative, la requête complémentaire est insérée par le terminal M dans la requête principale.

Lors d'un changement de planning, par exemple un retard dans l'heure de diffusion d'un contenu, le serveur S est informé du changement, par exemple par un émetteur de contenus, par exemple une chaine de télévision. Le serveur S met à jour le planning et transmet la modification au terminal M. Lors de l'affichage des informations complémentaires, la mise à jour du planning est prise en compte.

Dans un mode de réalisation dans lequel les informations complémentaires comprennent des heures de diffusion, le serveur S met à jour les informations complémentaires impactées par la modification de planning.

Dans une variante, chaque ensemble d'informations complémentaires Yj comprend également un score de pertinence S.

Un score de pertinence S d'un ensemble d'informations complémentaires est par exemple représentatif de l'intérêt que peut porter un utilisateur à cet ensemble d'informations complémentaires s'il reçoit cet ensemble d'informations complémentaires alors qu'il ne regarde pas le programme Pr diffusé associé.

Par exemple, le score de pertinence est une valeur comprise entre 0 et 100.

Une valeur de 30 est associée aux informations jugées les moins pertinentes, par exemple les liens vers les acteurs.

Une valeur de 90 est par exemple affectée aux ensembles d'informations complémentaires relatifs au début d'une émission.

Lors de l'étape E160, l'utilisateur saisit manuellement au moyen d'une interface graphique et du clavier, un identifiant de canal IC3.

L'étape E160 est suivie de l'étape E162 lors de laquelle le terminal M construit une requête complémentaire RQ5 contenant l'identifiant de canal saisi et un indicateur prédéfini indiquant que le canal d'identifiant IC3 n'est pas un canal de diffusion regardé.

A titre d'alternative, la requête RQ5 ne comprend pas d'indicateur et la requête se différencie d'une requête principal par exemple par un entête différent.

La requête complémentaire RQ5 est transmise par le terminal M lors de l'étape E164 et reçue par le serveur S lors de l'étape E166. Lors de l'étape E168, la requête complémentaire RQ5 est analysée par le serveur S et le serveur S sélectionne un ensemble d'informations complémentaires en fonction de la requête complémentaire RQ5.

Notamment, le serveur S sélectionne parmi les informations complémentaires relatives au canal de transmission d'identifiant IC3, les ensembles d'informations complémentaires pour lequel le score de pertinence est supérieur à une valeur prédéfinie.

La valeur prédéfinie est par exemple une valeur moyenne, par exemple 50 si les scores de pertinence sont compris entre 0 et 100.

L'étape E168 est suivie de l'étape E170 lors de laquelle le serveur S envoie une réponse RP contenant les éléments demandés. La réponse RP est transmise par exemple, entre deux envois d'ensembles d'informations complémentaires.

Les étapes E168 et E170 sont ensuite réitérées au fur et à mesure de l'avancement dans les programmes.

A titre d'alternative, le serveur S sélectionne les ensembles d'informations complémentaires en fonction de l'identifiant de canal et transmet tous les ensembles d'informations complémentaires en temps réel ou en avance de phase par rapport aux émissions diffusées sur le canal d'identifiant IC3.

Le terminal M sélectionne les ensembles d'informations complémentaires à afficher parmi les ensembles d'informations complémentaires en fonction d'une valeur de score de pertinence prédéfinie.

Puis, le terminal M affiche les ensembles d'informations complémentaires sélectionnées.

## Revendications

1. Procédé de réception d'informations complémentaires associées à un contenu multimédia diffusé pendant un intervalle de temps prédéterminé via un premier canal de transmission et affiché sur un écran déporté (ECR), **caractérisé en ce qu'**il comporte les étapes suivantes :
- obtention (E2, E102) d'un identifiant dudit premier canal (IC1, IC2);
- transmission (E4,E104) d'une requête principale (RQ1,RQ2) contenant l'identifiant obtenu (ICI, IC2);
- réception (E16,E116) de premières informations extraites d'au moins un ensemble d'informations complémentaires sélectionné parmi une pluralité d'ensembles d'informations complémentaires en fonction dudit identifiant de premier canal;
- affichage (E18,E120) sur un écran local, pendant au moins une partie de l'intervalle de temps prédéterminé, d'au moins une information des dites informations extraites;
- réception d'au moins un ensemble de deuxièmes informations complémentaires sélectionné parmi une pluralité d'ensembles d'informations complémentaires en fonction d'un identifiant de deuxième canal de transmission (IC3).

2. Procédé de réception selon la revendication 1 **caractérisé en ce que** le procédé comporte en outre une étape de transmission (E160) d'une requête complémentaire (RQ4) contenant ledit identifiant (IC3) de deuxième canal.

3. Procédé de réception selon la revendication 2 dans lequel ledit au moins un ensemble de deuxièmes informations complémentaires est sélectionné en fonction d'un évènement prédéterminé (Ev).

4. Procédé de réception selon la revendication 3 dans lequel ledit évènement déterminé (Ev) est le début d'un émission ou le moment d'un vote dans un programme..

5. Procédé de réception selon la revendication 1 dans lequel un score de pertinence étant associé à au moins une partie des ensembles d'informations complémentaires, ledit au moins un ensemble de deuxièmes informations complémentaires est sélectionné en fonction d'une valeur prédéfinie de score de pertinence.

6. Procédé de réception selon la revendication 1**caractérisé en ce que** les étapes de réception et d'affichage sur l'écran local sont réitérées en fonction d'un avancement dudit contenu diffusé.

7. Procédé de réception selon la revendication 1 **caractérisé en ce que** ledit au moins un ensemble d'informations complémentaires est sélectionné en outre en fonction d'un identifiant dudit contenu diffusé et/ou d'un instant donné dans l'intervalle de temps prédéterminé.

8. Procédé de réception selon la revendication 1 **caractérisé en ce que** la requête principale comprend en outre des paramètres utilisateur et **en ce que** ledit au moins un ensemble d'informations complémentaires et/ou lesdites informations extraites d'un ensemble d'informations complémentaires sont sélectionnés en outre en fonction desdits paramètres.

9. Procédé de réception selon la revendication 1 **caractérisé en ce que** les premières informations reçues sont extraites de plusieurs ensembles d'informations complémentaires, **en ce que** les informations extraites d'un ensemble comprennent au moins un identifiant de contenu et **en ce que**, lors de l'étape d'affichage, les informations sont affichées en fonction d'un identifiant de contenu sélectionné parmi les identifiants reçus en fonction d'un planning de diffusion.

10. Procédé de réception selon la revendication 1 **caractérisé en ce que** ledit au moins un ensemble d'informations complémentaires contient une information temporelle, et **en ce que** l'affichage sur l'écran local est effectué en fonction de ladite information temporelle.

11. Procédé de réception selon la revendication 1 dans lequel le contenu diffusé est affiché sur l'écran d'un premier dispositif d'un réseau privé, l'identifiant de canal est obtenu en réponse à une requête d'identifiant de canal émise par un deuxième dispositif dudit réseau privé.

12. Dispositif de réception (M) d'informations complémentaires associées à un contenu multimédia diffusé pendant un intervalle de temps prédéterminé via un premier canal de transmission et affiché sur un écran déporté, **caractérisé en ce qu'**il comporte :
- des moyens d'obtention d'un identifiant dudit premier canal;
- des moyens de transmission d'une requête contenant l'identifiant obtenu;
- des moyens de réception de premières informations extraites d'au moins un ensemble d'informations complémentaires sélectionné parmi une pluralité d'ensembles d'informations complémentaires en fonction dudit identifiant de canal;
- des moyens d'affichage sur un écran local, pendant au moins une partie de l'intervalle de temps prédéterminé, d'au moins une information des dites informations extraites.
- des moyens de réception d'au moins un ensemble de deuxièmes informations complémentaires sélectionné parmi une pluralité d'ensembles d'informations complémentaires en fonction d'un identifiant de deuxième canal de transmission.

13. Procédé de transmission d'informations complémentaires associées à un contenu multimédia diffusé pendant un intervalle de temps prédéterminé via un premier canal de transmission et affiché sur un écran déporté, **caractérisé en ce qu'**il comporte :
- une étape préalable d'enregistrement d'une pluralité d'ensembles d'informations complémentaires en association avec une information temporelle et avec un identifiant de canal;
- une étape de réception d'une requête contenant un identifiant de premier canal;
- une étape de sélection parmi une pluralité d'ensembles d'informations complémentaires d'au moins un ensemble d'informations complémentaires en fonction dudit identifiant de premier canal;
- une étape de sélection parmi une pluralité d'ensembles d'informations complémentaires d'au moins un ensemble d'informations complémentaires en fonction d'un identifiant de deuxième canal;
- une étape de transmission d'informations extraites dudit au moins un ensemble d'informations complémentaires sélectionné.

14. Serveur de données (S) **caractérisé en ce qu'**il comporte :
- des moyens d'enregistrement d'une pluralité d'ensembles d'informations complémentaires en association avec une information temporelle et avec un identifiant de canal de transmission de contenu multimédia;
- des moyens de réception d'une requête contenant un identifiant de canal;
- des moyens de sélection parmi la pluralité d'ensembles d'informations complémentaires d'au moins un ensemble d'informations complémentaires en fonction dudit identifiant de premier canal;
- des moyens de sélection parmi une pluralité d'ensembles d'informations complémentaires d'au moins un ensemble d'informations complémentaires en fonction d'un identifiant de deuxième canal;
- des moyens de transmission d'informations extraites dudit au moins un ensemble d'informations complémentaires sélectionné.

15. Produit programme d'ordinateur comprenant des instructions pour mettre en oeuvre les étapes d'un procédé selon la revendication 1 ou la revendication 13, lorsqu'il est chargé et exécuté par un processeur.
